# EUROPÄISCHE PATENTSCHRIFT

(11) **EP 0 580 604 B1**
(45) Veröffentlichungstag und Bekanntmachung des Hinweises auf die Patenterteilung: **09.04.1997**
(21) Anmeldenummer: 92906169.5
(22) Anmeldetag: 27.02.1992
(51) Int. Cl.: B60M 1/28

(54) **EINRICHTUNG ZUM VERLEGEN EINES DRAHTES, SEILES ODER DGL.**
DEVICE FOR LAYING A WIRE, CABLE OR THE LIKE
INSTALLATION POUR LA POSE D'UN CABLE, FIL OU SIMILAIRE

(30) Priorität: 05.03.1991 AT 464/91
(43) Veröffentlichungstag der Anmeldung: 02.02.1994
(73) Patentinhaber: ELIN ENERGIEVERSORGUNG GESELLSCHAFT m.b.H., 1141 Wien (AT)
(72) Erfinder: PACH, Karl, A-1210 Wien (AT)
(74) Vertreter: Krause, Peter
(86) Internationale Anmeldenummer: AT9200023
(87) Internationale Veröffentlichungsnummer: WO9215470

(56) Entgegenhaltungen:
- EP-A- 0 056 097
- DE-A- 2 012 248
- DE-A- 2 122 099
- FR-A- 2 129 540

## Beschreibung

Die Erfindung betrifft eine Einrichtung zum Verlegen eines Drahtes, Seiles oder dgl., vorzugsweise einer Oberleitung oder eines Fahrleitungssystems, oberhalb einer Fahrstrecke mit einem Fahrzeug, auf dem mindestens eine Drahttrommel gelagert ist und wenigstens ein heb-, senk- und schwenkbarer Hubarm zum Anheben des von der Drahttrommel ablaufenden Drahtes auf die Montagehöhe oberhalb der Fahrstrecke vorgesehn ist, wobei pro Draht ein Hubarm vorgesehen ist.

Aus der DE-OS 20 12 248 ist eine Montage von Fahrdrähten für elektrische Bahnen zur Befestigung an bestimmte Aufhängepunkten bekannt. Dazu besitzt ein Gerätewagen eine Führungsvorrichtung mittels derer die Seile in die Lage gebracht werden. Hiebei bedient man sich einer Rollenführung, die in der vertikalen und horizontalen Lage schwenkbar ist und bei der die bei den Rollen zusätzllich nach gegeneinander verschiebbar sind. Diese Führungsvorrichtung weist zwei Arme auf und zwar einen pro Draht.

Aus der DE-PS Nr. 22 11 247 ist eine Vorrichtung zum vorläufigen Installieren einer Oberleitung oberhalb einer Schienenstrecke mit einem Schienenfahrzeug bekannt. Auf diesem Schienenfahrzeug sind die Drahttrommeln und ein Hubarm zum Anheben der Drähte auf die Höhe der Befestigungshaken vorgesehen. Ferner ist den Drahttrommeln eine Zugspannungs-Steuervorrichtung, mit der sowohl auf das Tragseil als auch auf den Fahrdraht eine Längszugkraft aufbringbar ist, nachgeordnet. Nachteilig bei dieser Vorrichtung ist einerseits, daß das Tragseil und der Fahrdraht immer in der gleichen Vertikalebene verlegt werden muß und andererseits, daß das unter Zug stehende Seil nach der Zugspannungs-Steuervor-richtung eine Richtungsänderung erfährt. Darüber hinaus ist auch der Aufwand für die Hakensuchvorrichtung und für die Vorrichtung zum Abgeben der provisorischen Hänger überaus beträchtlich.

Ferner ist aus der EP 56097 ein Verfahren zur Montage eines Fahrdrahtes, wobei der Fahrdraht zwei parallellaufende Komponenten aufweist bekannt.

Eine Komponente ist ein zuspannungsarmes, stromführendes Schleifleitungsprofil und die andere Komponente ist ein Spannprofil, wobei die Schleifleitungskomponente ohne Abspannung der Tragkomponente auswechselbar ist.

Aus der DE-OS 21 22 099 ist eine Vorrichtung zum Verlegen von ummantelten Fahrdraht bekannt. Diese Vorrichtung weist unter anderem einen Trommeltransportwagen mit einer Leitertrommel auf, bei der eine Backenbremse vorgesehen ist. Nachteilig dabei ist, daß aufgrund der vielen Fahrzeugeinheiten für die Verlegung ein erheblicher Personal- und Arbeitsaufwand erforderlich ist. Außerdem leidet durch die Labilität der Einheit die Kontinuität und die Qualität der verlegten Leitung.

Gemäß der DD-PS 137 909 ist eine Seilführungsrolle zum Verlegen von Seitenfahrleitungen bekannt.

Ferner ist noch in der DD-PS 128 887 ein Verfahren zur Montage oder Demontage von Fahrleitungen für Schienenbahnen beschrieben. Dabei wird die Drahttrommel angetrieben und der Draht über einen Umlenkmechanismus geführt. Nachteilig dabei ist, daß der unter Zugspannung stehende Draht einer oder mehrerer Richtungsänderungen ausgesetzt ist.

Aufgabe der Erfindung ist es, eine Einrichtung der eingangs zitierten Art zu schaffen, mit der einerseits die obigen Nachteile vermieden werden und mit der andererseits ein kontinuierliches Verlegen einer Oberleitung oder eines Fahrleitungssystems nicht nur praktisch automatisch sondern auch in rationellster Weise erfolgen kann.

Die erfindungsgemäße Einrichtung ist dadurch gekennzeichnet, daß am freien Ende des Hubarmes eine Vorrichtung zum Ausfahren, Einholen bzw. Festhalten des Drahtes dreh- und/oder schwenkbar angeordnet ist. Mit der Erfindung ist es erstmals möglich, den Draht oder das Seil in der nach der Montage entgültigen Lage bei der Montage zu positionieren, wodurch die Qualität enorm erhöht wird und das bei einer Verlegegeschwindigkeit, die weit über dem des Standes der Technik liegt. Der Vorteil, daß für jeden Draht ein eigener Hubarm vorgesehen ist, ist darin zu sehen, daß die verschiedensten Drahtprofile mit unterschiedlichsten Zugkräften verlegt und montiert werden können. Ein weiterer Vorteil liegt darin, daß die Vorrichtung zum Ausfahren, Einholen bzw. Festhalten des Drahtes am freien Ende des Hubarmes angeordnet ist. Dadurch ist nämlich gewährleistet, daß die Positionierung des Drahtes bei der Montage in der endgültigen Verlegelage ist. Eine Richtungänderung des unter Zugkraft stehenden Drahtes ist ausgeschlossen. Dadurch, daß diese Vorrichtung am Ende des Hubarmes dreh-und/oder schwenkbar angeordnet ist, ist eine Bewegungsfreiheit unter Zugkrafteinwirkung möglich.

Gemäß einer besonderen Ausgestaltung der Erfindung reicht die Auslegeweite des Hubarmes über das Verlegeprofil hinaus. Bei Montagen von Oberleitungssystemen für Schienenfahrzeuge ist es unter Umständen erforderlich, Verstärkungs- und Erdleitungen außerhalb des üblichen Verlegeprofiles für Oberleitungen, also außerhalb der Maste und nicht über den Schienen vorzugehen. Auch derartige Leitungen können mit der Erfindung montiert werden.

Nach einer weiteren Ausgestaltung der Erfindung weist die Vorrichtung einen um seinen Mittelpunkt drehbar gelagerten Grundrahmen auf, auf den mindestens zwei auf je einer Platte angeordnete Rollenpaare durch die der Draht geführt ist, vorgesehen sind und die Rollenpaare jeweils um die Welle einer Rolle auf dem Grundrahmen mittels Federspeicher, vorzugsweise Hydraulikzylinder, schwenkbar sind, wobei die Drehpunkte diametral gegenüberliegen und die Rollen entweder einzeln oder das Rollenpaar gemeinsam antreibbar sind. durch den einfachen Aufbau dieser Vorrichtung ist es möglich, die Betriebssicherheit für die Verlegung von Drähten, Seilen oder dgl. zu gewährleisten. Die erfindungsgemäße Vorrichtung weist keine störungsanfälligen Elemente auf, sondern besteht nur aus Teilen des soliden Maschinenbaues. Es können Zugkräfte je nach Auslegung in der Größenordnung von 1,5 bis 2 t problemlos beherrscht werden.

Gemäß einer besonderen Ausgestaltung der Erfindung sind die Rollen entweder einzeln oder die Rollenpaare über Rollenketten, Getriebe, Zahnriemen über Hydraulikmotoren oder dgl. antreibbar. Mit diesen Hydraulikmotoren können die Antriebskräfte für die Rollen einfach und genau definiert werden.

Nach einer weiteren Ausgestaltung der Erfindung ist diese dadurch gekennzeichnet, daß jede Rolle aus zwei verbindbaren Teilen besteht, wobei die Teilung der Rolle in deren radialer Mittelebene liegt, daß der eine Teil drehfest mit einem Flansch der Welle verbunden ist, daß der zweite Teil im Abstand zum ersten Teil liegend mit diesem drehfest verbunden und gegenüber diesem unter Überwindung einer Vorspannkraft axial verschieblich sowie in bezug auf die Achse der Welle schräg stellbar ist, sodaß die Ebenen der beiden Teile einen Winkel einschließen und daß die von den beiden Teilen gebildete Rollennut dem halben Drahtprofil entspricht und eine Abmessung aufweist, die in der Ruhelage der beiden Teile etwas kleiner ist als die Abmessung des hindurchlaufenden Drahtes. Mit diesen Rollen ist es möglich, die Antriebskräfte auf den Draht oder das Seil zu übertragen. Dies ist vor allem auf die axiale Klemmkraft zurückzuführen, die durch die Vorspannkraft erzielt wird. Auch die Vergrößerung der Übertragungsfläch4en für die Klemmkraft wirkt sich positiv aus.

Gemäß einer weiteren Ausgestaltung der Erfindung sind zur Festlegung des Abstandes der beiden Rollenteile in deren Ruhelage und zur Erzielung der Vorspannkraft auf den die beiden Teile verbindenden Teile, Federn, vorzugsweise Tellerfedern angeordnet. Dadurch ist die definierte Vorspannkraft für beide Teile der Rollenanordnung zueinander und voneinander einstellbar.

Die Erfindung wird an Hand eines in der Zeichnung dargestellten Ausführungsbeispieles näher erläutert. Fig. 1 zeigt die schematische Darstellung der Einrichtung beim Vorlegen eines Oberleitungssystems für Schienenfahrzeuge, Fig. 2 die Vorrichtung zum Ausfahren, Einholen und Festhalten des Drahtes, Fig. 3 die gelenkige Verbindung von Vorrichtung zu Hubarm und die Fig. 4 einen Fahrleitungsdraht im Eingriff der Rollen.

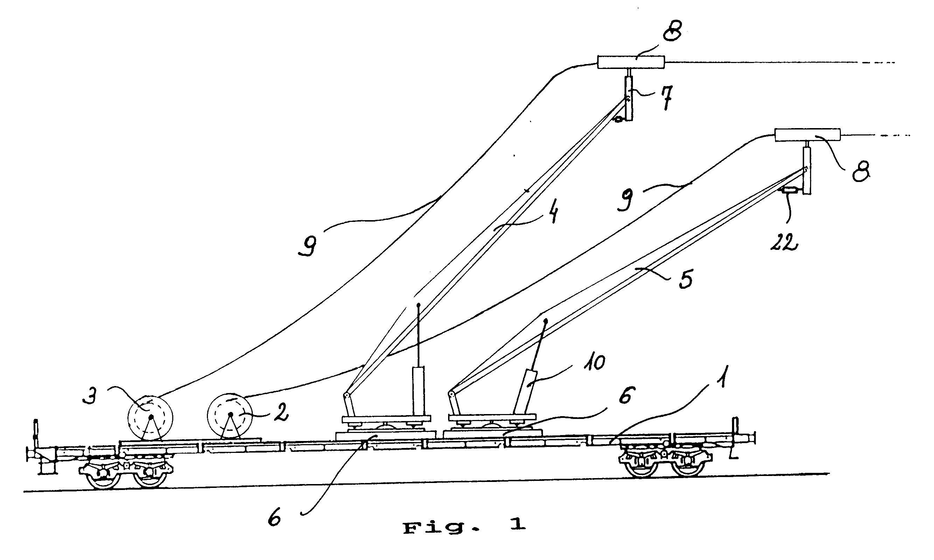

Gemäß der Fig. 1 weist das auf Schienen verfahrbare Fahrzeug 1, das natürlich auch selbstfahrend ausgebildet sein kann, zwei in Fahrtrichtung gesehen hintereinander angeordnete Drahtrommeln 2, 3 auf. Ferner sind auf der Ladefläche des Fahrzeuges 1 zwei, ebenfalls in Fahrtrichtung gesehen, hintereinander angeordnete Hubarme 4, 5 vorgesehen. Diese Hubarme 4, 5 sind jeweils über ein Drehgestell 6 auf der Ladefläche des Fahrzeuges 1 montiert, sodaß die Hubarme verschwenkt werden können. Am freien Ende jedes Hubarmes 4, 5 ist über eine Lagerung 7 die Vorrichtung 8 zum Ausfahren, Einholen bzw. Festhalten des Drahtes 9 angeordnet. Zum Heben und Senken des Hubarmes 4, 5 ist ein Hydraulikzylinder 10 vorgesehen. Natürlich kann der Hubarm 4, 5 auch hydraulisch ein- und ausfahrbar ausgebildet sein. Die Vorrichtung 8 ist wie später noch beschrieben, derart im Hubarm 4, 5 gelagert, daß der frei von der Drahttrommel 2, 3 ablaufende Draht 9 bei der Montage in der endgültigen Verlegelage positioniert ist. Die Verstellung der Vorrichtung 8 in der Lagerung 7 erfolgt über den Hydraulikzylinder 22.

Um auch Erd- und Verstärkungsleitungen mit dieser Einrichtung verlegen zu können, ist die Auslegeweite des Hubarmes 4, 5 so bemessen, daß auch außerhalb des üblichen Verlegeprofils, also nicht nur über den Schienen, sondern auch im Bereich über dem Bahndamm gearbeitet werden kann.

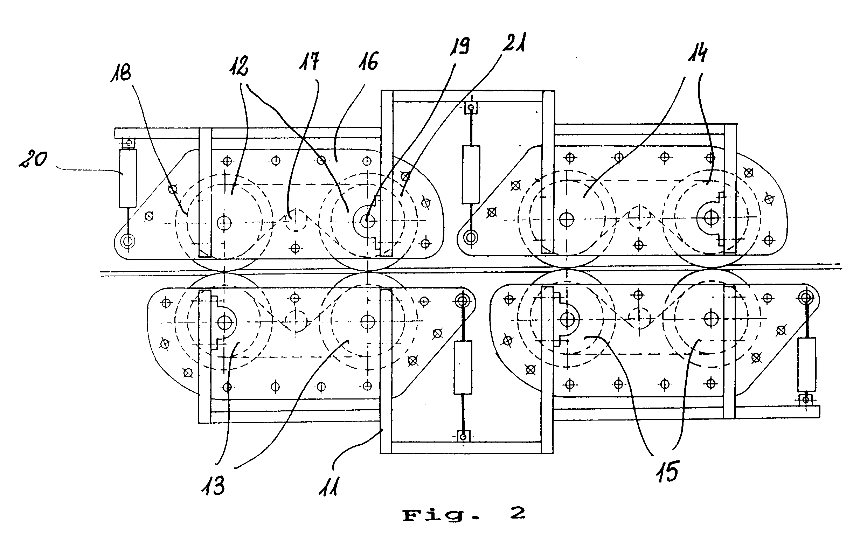

Die Vorrichtung 8 wird an Hand der Fig. 2 erklärt. In dem Grundrahmen 11 sind vier Rollenpaare 12, 13, 14, 15 vorgesehen, wobei jeweils zwei Rollenpaare 12, 13 bzw. 14, 15 gegenüberliegend angeordnet sind, sodaß der Draht 9 dazwischen geführt ist. Die Rollenpaare 12, 13, 14, 15 sind jeweils in Platten 16 gelagert und werden gemeinsam über einen Zahntrieb 18 angetrieben. Das Antriebsritzel 17 ist mit einem Hydraulikmotor - der nicht dargestellt ist - verbunden. Jedes Rollenpaar 12, 13, 14, 15 ist jeweils um die Welle 19 einer Rolle 21 schwenkbar gelagert, wobei die Schwenkbewegung über Hydraulikzylinder 20 ausgeführt wird. Die Drehpunkte dieser korrespondierenden Rollenpaare 12, 13 bzw. 14, 15 liegen diametral gegenüber, wodurch die Vorrichtung für verschiedenste Drahtstärken verwendet werden kann. Die auf den Draht 9 einwirkenden Kräfte können über die Hydraulikzylinder 20 eingestellt werden.

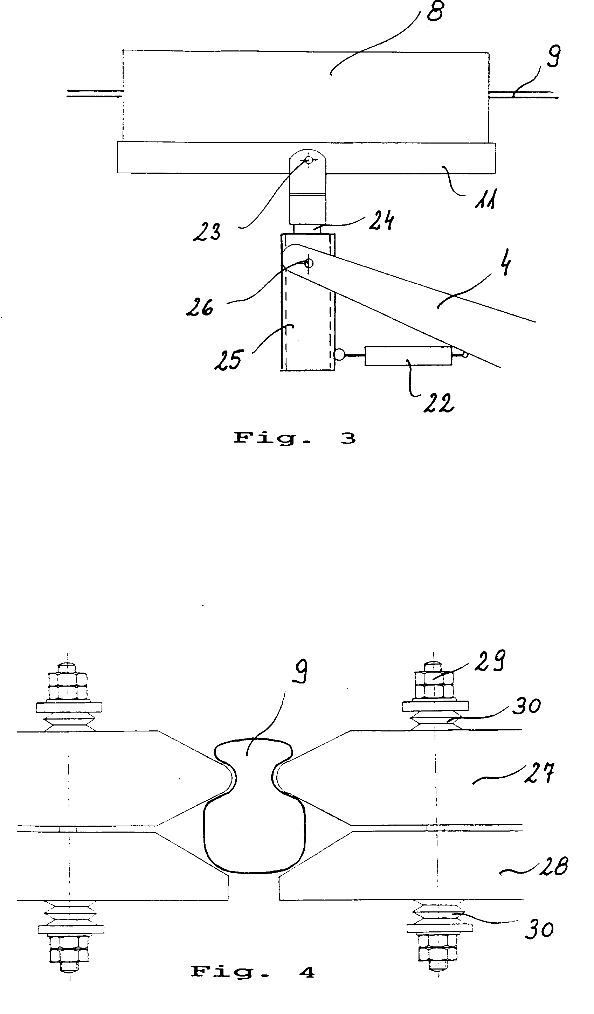

Die Vorrichtung 8 ist gemäß der Fig. 3 am freien Ende des Hubarmes 4 kardanisch gelagert. Dabei ist der Grundrahmen 11 nun dem Drehpunkt 23 in Richtung des durchlaufenden Drahtes 9 schwenkbar. Darüberhinaus ist ein Wellenstummel 24 vorgesehen, der in einem Rohr 25 drehbar gelagert ist. Über dem Drehpunkt 26 ist das Rohr 25 schwenkbar am Ende des Hubarmes 4 befestigt. Das Rohr 25 wird über den Hydraulikzylinder 22, der einerseits am Rohr 25 und anderseits am Hubarm 4 befestigt ist, bewegt. Der Hydraulikzylinder 22 ist mit dem Hydraulikzylinder 10 direkt über Leitungen verbunden, sodaß das Rohr 25 immer senkrecht steht.

Jede Rolle 21 besteht aus zwei Teilen 27, 28, die durch Schrauben 29 miteinander verbunden sind. Die Rollenteile 27, 28 sind so ausgebildet, daß sie beim Zusammenfügen eine Rollennut bilden, die etwa dem halben Profil des Drahtes 9 entspricht. Bei der Anordnung der Rollenpaare 12, 13 bzw. 14, 15 gemäß der Fig. 3 wird also der Draht 9 von beiden Seiten erfaßt.

Die Teilung der Rolle 21 liegt in deren radialer Mittelebene und ein Teil ist drehfest mit einem Flansch der Welle des nicht dargestellten Hydraulikmotors verbunden. Der zweite Teil ist im Abstand zum ersten Teil liegend mit diesem über die Schrauben 29 drehfest verbunden und gegenüber diesem unter Überwindung einer Vorspannkraft axial verschieblich sowie in Bezug auf die Achse der Welle schräg stellbar. In der Ruhelage weisen die beiden Teile 27, 28 eine Abmessung auf, die etwas kleiner ist als die Abmessung des hindurchlaufenden Drahtes 9. Zur Erzielung der Vorspannkraft sind Tellerfedern 30 vorgesehen.

## Patentansprüche

1. Einrichtung zum Verlegen eines Drahtes, Seiles oder dgl., vorzugsweise einer Oberleitung oder eines Fahrleitungssystems, oberhalb einer Fahrstrecke mit einem Fahrzeug (1), auf dem mindestens eine Drahttrommel (2, 3) gelagert ist und wenigstens ein heb-, senk- und schwenkbarer Hubarm (4, 5) zum Anheben des von der Drahttrommel (2, 3) ablaufenden Drahtes (9) auf die Montagehöhe oberhalb der Fahrstrecke vorgesehen ist, wobei pro Draht (9) ein Hubarm (4, 5) vorgesehen ist, dadurch gekennzeichnet, daß am freien Ende des Hubarmes (4, 5) eine Vorrichtung (8) zum Ausfahren, Einholen bzw. Festhalten des Drahtes (9) dreh- und/oder schwenkbar angeordnet ist.

2. Einrichtung nach Anspruch 1, dadurch gekennzeichnet, daß die Auslegeweite des Hubarmes (4, 5) über das Verlegeprofil hinausreicht.

3. Einrichtung nach Anspruch 1 oder 2, dadurch gekennzeichnet, daß die Vorrichtung (8) einen um seinen Mittelpunkt drehbar gelagerten Grundrahmen (11) aufweist, auf den mindestens zwei auf je einer Platte (16) angeordnete Rollenpaare (12, 13 bzw. 14, 15) durch die der Draht (9) geführt ist, vorgesehen sind und die Rollenpaare (12, 13, 14, 15) jeweils um die Welle (19) einer Rolle auf dem Grundrahmen (11) mittels Federspeicher (20), vorzugsweise Hydraulikzylinder, schwenkbar sind, wobei die Drehpunkte diametral gegenüberliegen und die Rollen entweder einzeln oder das Rollenpaar (12, 13, 14, 15) gemeinsam antreibbar sind.

4. Einrichtung nach Anspruch 3, dadurch gekennzeichnet, daß die Rollen entweder einzeln oder die Rollenpaare (12, 13, 14, 15) über Rollenketten, Getriebe, Zahnriemen (18) über Hydraulikmotoren oder dgl. antreibbar sind.

5. Einrichtung nach mindestens einem der Ansprüche 3 od. 4, dadurch gekennzeichnet, daß jede Rolle (21) aus zwei verbindbaren Teilen (27, 28) besteht, wobei die Teilung der Rolle in deren radialer Mittelebene liegt, daß der eine Teil (27) drehfest mit einem Flansch der Welle verbunden ist, daß der zweite Teil (28) im Abstand zum ersten Teil (27) liegend mit diesem drehfest verbunden und gegenüber diesem unter Überwindung einer Vorspannkraft axial verschieblich sowie in bezug auf die Achse der Welle schräg stellbar ist, sodaß die Ebene der beiden Teile einen Winkel einschließen und daß die von den beiden Teilen (27, 28) gebildete Rollennut dem halben Drahtprofil entspricht und eine Abmessung aufweist, die in der Ruhelage der beiden Teile (27, 28) etwas kleiner ist als die Abmessung des hindurchlaufenden Drahtes (9).

6. Einrichtung nach Anspruch 5, dadurch gekennzeichnet, daß zur Festlegung des Abstandes der beiden Rollenteile (27, 28) in deren Ruhelage und zur Erzielung der Vorspannkraft auf den die beiden Teile (27, 28) verbindenden Teile, Federn, vorzugsweise Tellerfedern (29) angeordnet sind.

## Claims

1. An arrangement for laying a wire, cable or the like, preferably an overhead conductor or a trolley wire system, above a track with a vehicle (1), on which at least one wire drum (2, 3) is mounted, and at least one raisable, lowerable and pivotable lifting arm (4, 5) is provided for lifting the wire (9) running off the wire drums (2, 3) to the installation height above the track, one lifting arm (4, 5) being provided for each wire (9), characterised in that a device (8) is rotatably and/or pivotably arranged at the free end of the lifting arm (4, 5) for letting out, drawing in or securing the wire (9).

2. An arrangement according to claim 1, characterised in that the laying width of the lifting arm (4, 5) extends beyond the laying profile.

3. An arrangement according to claim 1 or 2, characterised in that the device (8) comprises a base frame (11) which is mounted so as to be pivotable about its centre point and on which at least two pairs of rollers (12, 13 and 14, 15) are mounted on a plate (16) in each case, the wire (9) being guided through said pairs of rollers (12, 13, 14, 15) and the pairs of rollers (12, 13, 14, 15) being pivotable in each case on the base frame (11) about the shaft (19) of a roller by means of spring-loaded elements (20), preferably hydraulic cylinders, the pivot points being diametrally opposed and the rollers being drivable individually or the pairs of rollers (12, 13, 14, 15) being drivable together.

4. An arrangement according to claim 3, characterised in that the rollers are drivable individually or the pairs of rollers (12, 13, 14, 15) are drivable via roller chains, gears, toothed belts (18) by means of hydraulic motors or the like.

5. An arrangement according to at least one of claims 3 or 4, characterised in that each roller (21) is formed by two connectable parts (27, 28), the division of the roller lying in the radial centre plane thereof, one part (27) is torsionally rigidly connected to a flange of the shaft, the second part (28) is torsionally rigidly connected to the first part (27) at a distance therefrom and is axially displaceable relative to the first part (27) by overcoming a prestressing force and can be adjusted at an angle to the axis of the shaft, so that the planes of the two parts forms an angle, and the roller groove formed by the two parts (27, 28) corresponds to half the wire profile and has a dimension which in the inoperative state of the two parts (27, 28) is somewhat smaller than the dimension of the wire (9) passing through.

6. An arrangement according to claim 5, characterised in that, for fixing the distance of the two roller parts (27, 28) in the inoperative position thereof and, in order to produce the prestressing force, springs, preferably cup springs (29), are arranged on the parts connecting the two parts (27, 28).

## Revendications

1. Installation destinée à la pose d'un fil, d'un câble ou élément similaire, de préférence d'une ligne de caténaire ou d'un système de ligne de contact, au-dessus d'une voie de circulation, comprenant un véhicule (1) sur lequel est monté au moins un touret à fil (2, 3) et est prévue au moins une flèche de levage (4, 5) pouvant être soulevée, abaissée et pouvant pivoter, pour soulever le fil (9) se déroulant du touret à fil (2, 3), à la hauteur de montage, au-dessus de la voie de circulation, une flèche de levage (4, 5) étant prévue par fil (9), caractérisée en ce qu'à l'extrémité libre de la flèche de levage (4, 5), est agencé de manière rotative et/ou pivotante, un dispositif (8) destiné à extraire, à faire rentrer et à immobiliser le fil (9).

2. Installation selon la revendication 1, caractérisée en ce que la portée de la flèche de levage (4, 5) peut s'étendre au-delà du profil de pose.

3. Installation selon la revendication 1 ou 2, caractérisée en ce que le dispositif (8) comprend un cadre de base (11) monté rotatif autour de son point central, et sur lequel sont prévues au moins deux paires de galets (12, 13 et 14, 15) montées chacune sur une plaque (16) et réalisant le guidage du fil (9), et en ce que les paires de galets (12, 13, 14, 15) peuvent pivoter chacune sur le cadre de base (11), autour de l'arbre (19) d'un galet, au moyen d'accumulateurs à ressort (20), de préférence des vérins hydrauliques, les points de rotation étant diamétralement opposés et les galets pouvant être entraînés individuellement, ou en commun pour chaque paire de galets (12, 13, 14, 15).

4. Installation selon la revendication 3, caractérisée en ce que les galets peuvent être entraînés individuellement ou les paires de galets (12, 13, 14, 15) peuvent être entraînées par des chaînes à galets, des transmissions, des courroies crantées (18), au moyen de moteurs hydrauliques ou éléments similaires.

5. Installation selon l'une au moins des revendications 3 ou 4, caractérisée en ce que chaque galet (21) est composé de deux parties (27, 28) pouvant être reliées l'une à l'autre, la division du galet se situant dans son plan radial central, en ce que l'une des parties (27) est reliée de manière fixe en rotation à un flasque de l'arbre, en ce que la seconde partie (28) est reliée de manière fixe en rotation à la première partie (27) en étant située à distance de celle-ci, et peut, en surmontant une force de précontrainte, coulisser axialement par rapport à cette première partie (27), et être placée en position oblique par rapport à l'axe de l'arbre, de sorte que les plans des deux parties forment un angle entre-eux, et en ce que la rainure de galet formée par les deux parties (27, 28) correspond à la moitié du profil de la section du fil et présente une dimension qui, à l'état de repos des deux parties (27, 28) est légèrement inférieure à la dimension du fil (9) qui y circule.

6. Installation selon la revendication 5, caractérisée en ce que pour fixer la distance entre les deux parties de galet (27, 28) dans leur position de repos et en vue d'obtenir la force de précontrainte, des ressorts, de préférence des rondelles élastiques (30), sont disposés sur les pièces qui relient les deux parties (27, 28).
